# FASCICULE DE BREVET EUROPEEN

(11) **EP 2 008 552 B1**
(45) Date de publication et mention de la délivrance du brevet: **24.11.2010**
(21) Numéro de dépôt: 08159072.1
(22) Date de dépôt: 26.06.2008
(51) Int. Cl.: A47J 27/022, A47J 36/02, C03C 8/16, C03C 8/18, C23D 5/02, C23D 5/06

(54) **Article culinaire émaillé anti-rayures et procédé de fabrication d'un tel article**
Emailliertes kratzfestes Kochgerät und Herstellungsverfahren eines solchen Geräts
Scratch-proof enamelled culinary item and method of producing such an item

(30) Priorité: 29.06.2007 FR 0704731
(43) Date de publication de la demande: 31.12.2008
(73) Titulaire: SEB S.A., 69130 Ecully (FR)
(72) Inventeur: Parent, Fabrice, 73420 Mery (FR); Muller, Pierre-Jean, 74540 Saint Felix (FR)
(74) Mandataire: Pichat, Thierry

(56) Documents cités:
- FR-A- 2 625 494
- FR-A- 2 882 240

## Description

La présente invention concerne de manière générale un article culinaire émaillé compatible avec une utilisation sur une plaque de cuisson vitrocéramique ou à induction, ainsi qu'un procédé de fabrication d'un tel article.

Les articles culinaires comprennent typiquement une calotte creuse, dont le fond présente une face intérieure destinée à recevoir des aliments et une face extérieure destinée à être disposée du côté de la source de chaleur. La face extérieure peut être typiquement recouverte d'une ou plusieurs couches d'émail, qui permettent non seulement d'améliorer l'esthétique du fond de l'article, mais aussi de le protéger, notamment contre les chocs thermiques ou de l'oxydation (par exemple dans le cas d'articles culinaires en fonte).

On connaît également le brevet français FR 2 576 038, appartenant à la demanderesse, qui décrit un revêtement formé de deux couches d'émail contenant des billes de verre, dont au moins certaines ont un diamètre supérieur à l'épaisseur de la couche d'émail qui les renferme et font saillie à la surface de ces couches. Toutefois, les billes de verre de la seconde couche sont disposées en quinconce par rapport aux billes de verre de la première couche et ont tendance à s'enfoncer entre les billes de verre de la première couche et donc à ne pas être en saillie sur la seconde couche extérieure. La résistance à l'usure de ce revêtement s'en trouve donc diminuée. Par ailleurs, le revêtement d'émail, du fait de ses propriétés isolantes, affecte la transmission de la chaleur à travers le fond de l'ustensile de cuisson.

Pour remédier à ces problèmes d'enfoncement des billes et augmenter ainsi la résistance à l'usure du revêtement, la demanderesse a alors proposé dans son brevet européen EP 0 323 349 un ustensile de cuisson comprenant un fond présentant sur sa face extérieure un revêtement d'émail. Ce revêtement d'émail comprend une première couche d'émail recouvrant la face extérieure du fond de l'ustensile, puis deux couches d'émail superposées renfermant chacune des billes de verre, la seconde couche d'émail étant une couche extérieure discontinue, qui constitue un décor en relief. Parmi les billes de verre présentes dans ces couches, certaines présentent un diamètre supérieur à l'épaisseur des couches d'émail qui les renferment et font saillie à la surface de ces couches. En outre, certaines des billes de la couche extérieure discontinue sont en appui sur les billes de la couche sous-jacente.

Toutefois, un tel revêtement présente l'inconvénient que le contact de type verre contre verre entre les billes en verre faisant saillie sur la couche d'émail de décoration et, par exemple, une plaque de cuisson de type vitrocéramique, est susceptible de créer des rayures dans la plaque de cuisson.

Or, la demanderesse a maintenant trouvé qu'il était possible de résoudre ces problèmes de rayures en remplaçant les billes de verre par des charges arrondies (ou billes) en un matériau présentant une dureté inférieure à celle du verre et un point de fusion suffisamment élevé pour que ces billes ne fondent pas lors de l'étape de cuisson du procédé d'élaboration de l'article.

Plus particulièrement, la demanderesse a trouvé qu'un revêtement d'émail renfermant des charges arrondies présente un effet anti-rayures amélioré si ces charges sont en un matériau ayant un point de fusion supérieur à 900°C et une dureté sur l'échelle de MOHS inférieure à 6, et que celles qui font saillie à la surface du revêtement d'émail sont réparties de manière homogène à la surface de ce revêtement.

Par dureté MOHS, on entend au sens de la présente invention l'aptitude du support à être rayé par un minéral défini par le tableau ci-dessous :

| Dureté MOHS | Nom des minéraux |
|---|---|
| 1 | Talc |
| 2 | Gypse |
| 3 | Calcite |
| 4 | Fluorite |
| 5 | Apatite |
| 6 | Orthose |
| 7 | Quartz |
| 8 | Topaze |
| 9 | Corindon |
| 10 | Diamant |

Par charges arrondies, on entend au sens de la présente invention des charges dépourvues d'angles, en particulier de forme ovoïde ou sphérique.

La demanderesse a également trouvé qu'il était possible de réaliser un tel revêtement par l'application par sérigraphie, puis le séchage et la cuisson d'au moins une couche de pâte d'émail rhéofluidifiante thixotrope comprenant les charges sphériques arrondies (ou billes).

Par pâte d'émail, on entend au sens de la présente invention, une pâte anhydre à base de fritte d'émail pulvérulente.

Par pâte rhéofluidifiante thixotrope, on entend au sens de la présente invention, une pâte se présentant au repos à l'état visqueux ou sous forme de gel et devenant liquide lors de son application par sérigraphie sur un support ou sous agitation mécanique, la diminution de viscosité de la pâte d'émail pouvant être observée en augmentant les contraintes d'écoulement et/ou en les maintenant pendant le temps nécessaire à la diminution de la viscosité.

Etant donné que les charges arrondies en un matériau ayant un point de fusion supérieur à 900°C et une dureté MOHS inférieure à 6 sont plus denses que les billes en verre, l'utilisation de pâtes rhéofluidifiantes thixotropes permet d'en obtenir une répartition uniforme à la surface du revêtement d'émail. En effet au repos, du fait de la viscosité élevée de la pâte d'émail, les billes malgré leur densité élevée sont maintenues en suspension dans la pâte et la sédimentation des charges dans la pâte est très ralentie, voire arrêtée, ce qui permet d'appliquer à tout moment une couche de revêtement contenant un pourcentage constant de billes dans le dépôt. Par ailleurs afin de faciliter l'étalement de la pâte d'émail, sa viscosité doit être minimale lors de manipulations telles que le transfert de la pâte ou son application sur un support, par exemple pour faciliter son écoulement à travers les mailles d'un écran sérigraphique.

La présente invention a donc pour objet un article culinaire présentant un fond avec une face intérieure pouvant recevoir des aliments et une face extérieure destinée à être disposée du côté d'une source de chaleur, ladite face extérieure étant revêtue d'un revêtement d'émail, qui comprend des charges arrondies qui font saillie de manière que cette saillie soit apparente.

Selon l'invention, les charges arrondies sont en un matériau ayant un point de fusion supérieur à 900°C et une dureté MOHS inférieure à 6, et celles qui font saillie sont réparties de manière homogène à la surface de ce revêtement.

De préférence, la densité surfacique des charges qui font saillie à sa surface du revêtement d'émail est comprise entre 150 et 300 billes au mm².

Au-dessus d'une densité surfacique de charges apparentes de 300 billes au mm², on observe une diminution de la résistance aux chocs thermiques et mécaniques ainsi qu'une perte de brillance.

Au-dessous d'une densité surfacique de charges apparentes de 150 billes au mm², la répartition du poids de l'objet n'est pas suffisamment uniforme et on observe une sensibilisation à la rayure de la plaque de cuisson vitrocéramique ou à induction.

De préférence, les charges arrondies sont en un matériau dont la dureté MOHS est égale ou inférieure à 5, 5.

A titre de charges arrondies ou billes utilisables dans l'article culinaire selon l'invention, on peut notamment citer les billes et alliages métalliques, et en particulier les billes en cuivre, en bronze ou en acier réfractaire.

De préférence, on utilise des billes en acier inoxydable. En effet, de telles billes présentent l'avantage de ne pas ou de peu s'oxyder à la température de cuisson des émaux.

Les charges métalliques apparentes de forme arrondie permettent à la fois d'augmenter la résistance à l'usure du revêtement d'émail et d'en réduire le coefficient de frottement en raison de la diminution de la surface de contact entre l'article (via ses billes) et la plaque de cuisson et de la moindre dureté des billes métalliques, de sorte que ce revêtement est facilement nettoyable et ne présente pas de risque de rayer des surfaces sensibles, telles que des plaques vitrocéramiques ou à induction.

Avantageusement, le revêtement d'émail comprend au moins une couche externe qui est une couche sérigraphique obtenue à partir d'une pâte d'émail rhéofluidifiante thixotrope, cette couche externe contenant les charges arrondies.

Par couche sérigraphique externe, on entend au sens de la présente invention une couche d'émail obtenue en appliquant par sérigraphie une couche de pâte d'émail rhéofluidifiante thixotrope d'une épaisseur de 15 à 30 µm.

Selon un premier mode de réalisation de la présente invention, le revêtement d'émail comprend successivement à partir du fond de l'article :
- une première couche d'émail, dite couche d'adhérence, qui recouvre la face extérieure du fond,
- une deuxième couche d'émail, dite couche de couverture, qui recouvre la couche d'adhérence, et
- une troisième couche d'émail contenant les charges arrondies et formant une couche sérigraphique externe recouvrant totalement la couche de couverture.

Selon un deuxième mode de réalisation particulièrement avantageux de la présente invention, le revêtement d'émail comprend en outre une quatrième couche d'émail contenant des charges arrondies selon l'invention et formant une couche sérigraphique externe discontinue constituant un décor recouvrant partiellement la troisième couche d'émail, de sorte que certaines des charges de la quatrième couche d'émail sont en appui sur celles de la troisième couche d'émail.

Les charges arrondies selon l'invention, et notamment les billes métalliques, sont solidement ancrées dans l'émail des couches sérigraphiques malgré leur surface lisse, qui est peu favorable pour leur ancrage dans des couches d'émail. Or, la sérigraphie étant une technique consistant à appliquer une pâte d'émail (pâte anhydre à base de fritte d'émail pulvérulente) à travers les mailles d'un écran, au moyen d'une racle, une telle technique a pour effet de déposer une couche d'une épaisseur uniforme garantie par le diamètre du fil de l'écran de sérigraphie et une bonne répartition des billes dans les couches d'émail.

Par ailleurs, pour ce qui concerne plus particulièrement le deuxième mode de réalisation de l'invention, l'enfoncement des billes dans la quatrième couche d'émail (deuxième couche sérigraphique) est contrôlé, d'une part par la présence de billes dans la troisième couche d'émail (première couche sérigraphique) sous-jacente sur lesquelles peuvent prendre appui au moins certaines des billes de la quatrième couche d'émail. D'autre part, les billes présentes dans la troisième couche d'émail, permettent d'augmenter la résistance à l'usure et de faciliter le nettoyage des parties de cette couche qui ne sont pas recouvertes par la couche de décor discontinue en émail.

Avantageusement, l'article culinaire selon l'invention comprend une calotte en fonte ou en acier émaillable, qui est pourvue du fond émaillé tel que défini ci-dessus.

A titre d'acier émaillable utilisable selon l'invention pour réaliser la calotte, on peut notamment citer les aciers à bas carbone et les aciers décarburés. De préférence, la calotte est en fonte.

La composition de l'émail doit s'ajuster à la nature du support.

Avantageusement, le diamètre maximum des billes est au plus égal à deux fois l'épaisseur de la couche d'émail externe. Ainsi, toutes les billes sont engagées dans une couche d'émail sérigraphique suivant une profondeur qui est au moins égale à leur diamètre, ce qui assure un excellent ancrage de ces billes dans la couche d'émail.

Avantageusement, le diamètre des billes est compris entre 5 et 40 microns, le diamètre moyen de ces billes étant compris entre 15 et 20 microns, et l'épaisseur de la couche d'émail externe est comprise entre 15 et 30 microns.

De préférence, la couche d'émail externe contient entre 5 et 30 % en poids de billes.

En-dessous de 5% de billes, l'effet de celles-ci sur les propriétés de l'émail devient négligeable, tandis qu'au-dessus de 30% la cohésion entre les billes et l'émail est altérée.

Avantageusement, la couche d'émail externe comprend également des particules solides de structure lamellaire ayant des propriétés lubrifiantes telles que le talc, le graphite, le bisulfure de molybdène, le bisulfure de vanadium, le nitrure de bore et leurs mélanges.

Ces particules de structure lamellaire jouent le rôle de particules lubrifiantes qui réduisent notablement le coefficient de friction du revêtement d'émail et diminuent ainsi considérablement l'effet abrasif de la plaque de cuisson sur l'ustensile. De plus, ces particules de structure lamellaire confèrent à la couche d'émail des propriétés de facilité de nettoyage. Les particules de structure lamellaire sont avantageusement contenues dans la quatrième couche d'émail, car elles complètent l'action des billes, voire prennent le relais de ces dernières lorsqu'elles sont usées jusqu'à la surface de la couche.

La présente invention a encore pour objet une pièce intermédiaire non cuite conduisant, après cuisson, à un article culinaire selon l'invention, caractérisé en ce que le revêtement d'émail non cuit comprend une couche externe de pâte d'émail rhéofluidifiante thixotrope et en ce que les charges arrondies sont en un matériau ayant un point de fusion supérieur à 900°C et une dureté MOHS inférieure à 6, les charges qui font saillie sur le revêtement d'émail étant réparties de manière homogène dans la couche externe de pâte d'émail.

De préférence, la couche de pâte anhydre thixotrope comprend 5 à 30% en poids de charges arrondies

Enfin, la présente invention a encore pour objet un procédé de fabrication d'un article culinaire selon l'invention qui comprend les étapes successives suivantes :
- application sur la face extérieure du fond d'une première couche en émail, dite couche d'adhérence, par pulvérisation d'une barbotine aqueuse de fritte d'émail, suivie d'un séchage et d'une cuisson à une température supérieure à 800°C ;
- application sur la couche d'adhérence cuite, d'une deuxième couche d'émail, dite couche de couverture, également par pulvérisation d'une barbotine aqueuse de fritte d'émail suivie d'un séchage, la couche de couverture formant, après séchage le biscuit ;
- application par sérigraphie, sur la couche de couverture, d'une couche de pâte d'émail contenant des charges arrondies, puis séchage , cette première couche de pâte anhydre étant destinée à former après cuisson la troisième couche d'émail, ou première couche d'émail sérigraphique ; et
- cuisson, de préférence à une température comprise entre 770 et 820°C.

Selon l'invention, les charges sphériques utilisées sont en un matériau ayant un point de fusion supérieur à 900°C et une dureté MOHS inférieure à 6, et la pâte d'émail sont rhéofluidifiante et thixotrope.

Selon un mode de réalisation avantageux du procédé de l'invention, ce dernier comporte en outre, entre l'application et le séchage de la couche continue de pâte d'émail et l'étape de cuisson finale, une étape d'application par sérigraphie sur la couche continue de pâte d'émail séchée, d'une couche discontinue de pâte d'émail rhéofluidifiante et thixotrope et contenant des charges arrondies, puis séchage.

La ou les couche(s) de pâte d'émail constitue(nt), une fois séchée(s) (notamment par infrarouge ou à l'aide de tubes radiants) le biscuit. Pour augmenter la dureté du biscuit et en diminuer sa porosité, on y incorpore des agents cohésifs de façon à la rendre plus cohésive et moins poreuse.

A titre d'agents cohésifs utilisables dans les couches d'émail selon l'invention on peut notamment citer les liants organiques, les gommes et la carboxyméthylcellulose (CMC). Ces agents cohésifs disparaissent lors de la cuisson du biscuit.

Enfin, on peut avantageusement appliquer une couche antiadhésive (en PTFE ou en émail) sur la face intérieure du fond de la calotte.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation,
- la figure 2 représente une vue schématique en coupe d'un support d'article culinaire conforme à l'invention selon une deuxième variante de réalisation.

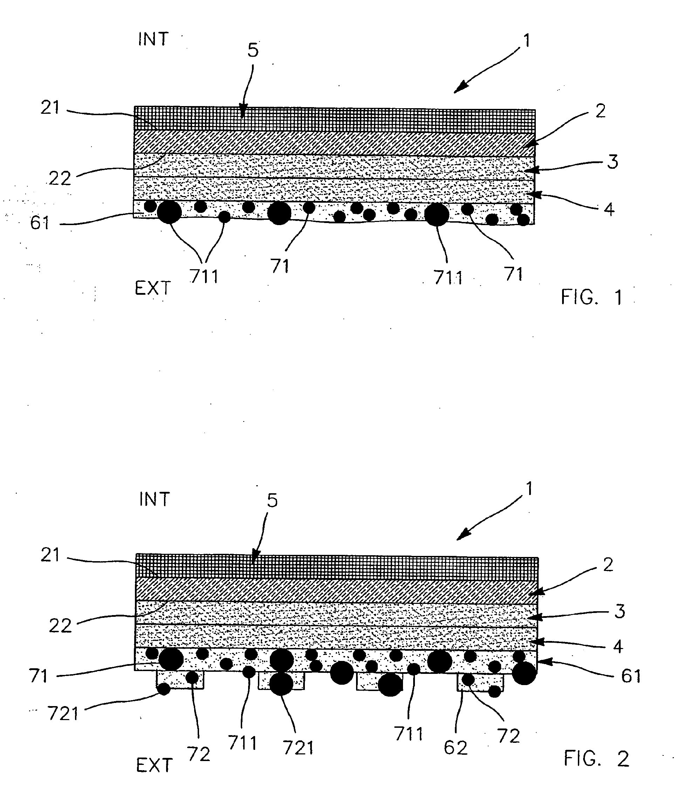

Sur la figure 1 annexée, on a représenté un article culinaire 1 en fonte qui comprend une calotte creuse définissant un fond 2, dont la face extérieure 22 est recouverte d'une première couche d'émail 3 (ou couche d'adhérence), qui est elle-même recouverte d'une seconde couche d'émail 4 (ou couche de couverture). Cette couche de couverture 4 est elle-même recouverte d'une couche d'émail sérigraphique 61 continue comprenant des charges sphériques métalliques 71, 711, dont certaines 711 font saillie à la surface de cette couche 61.

Dans la variante illustrée sur la figure 2 annexée, une couche d'émail sérigraphique 62 discontinue formant décor recouvre partiellement la couche sérigraphique 61. Cette couche d'émail 62 comprend également des charges sphériques métalliques 72, 721, dont une partie 721 fait saillie à la surface de cette couche. Une partie des charges 711 de la couche sérigraphique 61 sous jacente fait saillie à la surface des parties de cette couche 61 qui ne sont pas recouvertes par la couche de décor 62.

Les figures 1 et 2 montrent également que la surface intérieure 21 du fond 2 est revêtue d'une couche antiadhésive 5.

Avantageusement, la couche d'adhérence 3 et, le cas échéant, la couche de couverture 4, recouvrent toute la face extérieure de la calotte l'ustensile 1 (non représentée sur les figures), tandis que les couches d'émail sérigraphiques 61, 62 sont appliquées uniquement dans la zone du fond 2 de l'article 1.

Les couches d'adhérence 3 et de couverture 4 sont appliquées par pulvérisation à partir d'une barbotine aqueuse de fritte d'émail, tandis que les deux couches d'émail sérigraphiques 61, 62 contenant les billes métalliques 71, 711, 72, 721 sont obtenues par application, puis séchage de pâtes d'émail rhéofluidifiantes et thixotropes, ces pâtes pouvant être frittées à une température de l'ordre de 770°C à 820°C.

Lors de l'application par sérigraphie des pâtes d'émail pour former les couches d'émail 61, 62 sérigraphiques, celles-ci sont poussées à travers les mailles d'un écran au moyen d'une racle qui dépose les billes 71, 711, 72, 721 dans leur couche d'émail 61, 62 respective. Ainsi, les billes 71, 711 de la troisième couche d'émail 61 (ou première couche sérigraphique) prennent appui sur la surface de la couche d'émail sous-jacente qui est la couche de couverture 4, tandis que les billes 72, 721 de la quatrième couche d'émail 62 (ou deuxième couche sérigraphique) prennent appui sur les billes 71, 711 de la troisième couche d'émail.

Les couches d'émail 3, 4, 61, et le cas échéant la couche 62, sont cuites simultanément à une température de l'ordre de 770°C-820°C.

Chaque couche d'émail sérigraphique 61, 62 contient entre 5 et 30% en poids de charges sphériques 71, 711, 72, 721.

Pour ce qui concerne plus particulièrement la deuxième variante de réalisation de l'invention, lors de l'application de la quatrième couche d'émail 62, les billes 72, 721 de celle-ci ne peuvent s'enfoncer dans la troisième couche d'émail 61 car les billes 71, 711 contenues dans cette dernière 61 limitent l'enfoncement des billes 72, 721. Les billes 72, 721 de la deuxième couche sérigraphique 62 permettent à celle-ci de résister à l'usure, tout en préservant l'aspect esthétique du décor en relief formé par cette couche 62. Les billes 71, 711, outre les propriétés indiquées plus haut, protègent contre l'usure des parties de la couche d'émail 61 qui ne sont pas recouvertes par la couche discontinue 2, tout en facilitant le nettoyage de ces parties.

La ou les couches d'émail sérigraphiques 61, 62 peuvent, entre les billes métalliques 71, 711, 72, 721, également contenir des particules solides de structure lamellaire ayant des propriétés lubrifiantes telles que les particules de talc, de graphite, de bisulfure de molybdène, de bisulfure de vanadium, de nitrure de bore, etc. et leurs mélanges. Ces particules lubrifiantes facilitent l'application des couches d'émail sérigraphiques 61, 62 et augmentent leurs propriétés de facilité de nettoyage.

On donne ci-après un mode de réalisation d'un article culinaire émaillé conforme à la deuxième variante de réalisation de l'invention, qui comprend les étapes suivantes :
- pulvérisation sur la face extérieure de la calotte de l'ustensile d'une barbotine de fritte d'émail, pour former une couche d'émail d'adhérence 3, puis séchage et cuisson à une température supérieure ou égale à 800°c ;
- pulvérisation sur la couche d'adhérence 3 cuite d'une barbotine de fritte d'émail pour constituer la couche d'émail de couverture 4 ;
- après séchage de la couche de couverture 4, on applique sur celle-ci, par sérigraphie, une couche 61 de pâte d'émail rhéofluidifiante thixotrope renfermant des billes métalliques 71, 711 ; et
- après séchage de la couche de pâte 61, on applique sur celle-ci, également par sérigraphie, une couche 62 discontinue de pâte d'émail rhéofluidifiante thixotrope renfermant des billes métalliques 72, 721 et qui est destinée à former après cuisson un décor.

La composition de chacune des couches de pâtes anhydres 61, 62 de fritte d'émail est indiquée ci-après:
a) 30 à 50% en poids d'une fritte d'émail pulvérulente par rapport au poids total de la pâte, la fritte d'émail comprenant :

| | |
|---|---|
| SiO₂ : | 35-65% |
| B₂O₃ : | 10-25% |
| Na₂O : | 5-20% |
| TiO₂ : | 5-20% |
| K2O : | <10% |
| ZnO : | <5% |
| NO₂ : | <5% |
| P2O₅ : | <2% |
| ZrO₂ : | <2% |
| LiO₂ : | <1% |
| MgO : | <1% |

b) 5 à 30% en poids de pigments minéraux par rapport au poids total de la pâte, et
c) 5 à 30% en poids par rapport au poids total de la pâte de billes métalliques ayant un diamètre compris entre 5 et 40 microns, avec un diamètre moyen compris entre 15 et 20 microns, en fonction de la densité de ces charges.
d) 20 à 50% en poids par rapport au poids total de la pâte d'une composition à base de dérivés résiniques (comme par exemple l'huile de pin) ou terpéniques (comme par exemple un mélange d'alcools terpéniques comme celui commercialisé sous la dénomination commerciale Terpinéol par la société DRT située à DAX (40105, France) qui comprend :
- 20 à 50% en poids de résines ou de dérivés terpinéiques,
- 30 à 50% en poids de pétrole désaromatisé,
- 5 à 20% en poids d'éthylcellulose, et
- 1 à 10% en poids de cire.

C'est principalement la cire qui confère de la thixotropie aux pâtes sérigraphiques.

Sans contrainte mécanique, la cire est figée et rend très visqueuse la pâte d'émail qui la contient et permet ainsi de maintenir en suspension dans cette pâte les charges sphériques métalliques. Puis, sous l'effet d'une contrainte mécanique (notamment par cisaillement), et en particulier de celle exercée par une racle lors d'un processus d'application par sérigraphie, la cire n'est plus figée et la pâte d'émail contenant les billes métalliques devient liquide, ce qui facilite son étalement à la surface de l'article culinaire.

Après l'application de la couche de pâte d'émail par sérigraphie, la cire contenue dans ces couches se fige à nouveau rapidement et permet alors de maintenir en suspension les charges sphériques dans toute l'épaisseur de la pâte.

Après cuisson, on obtient un article culinaire dont la face extérieure du fond comprend un revêtement d'émail avec une densité surfacique de 150 à 300 billes/mm² à la surface du revêtement.

## Revendications

1. Article culinaire (1) présentant un fond (2) avec une face intérieure (21) pouvant recevoir des aliments et une face extérieure (22) destinée à être disposée du côté d'une source de chaleur, ladite face extérieure (22) étant revêtue d'un revêtement d'émail (3, 4, 61, 62) qui comprend des charges arrondies (71, 711, 72, 721) dont certaines (711, 721) font saillie sur ledit revêtement d'émail (3, 4, 61, 62) de manière que cette saillie soit extérieurement apparente,
**caractérisé en ce que** lesdites charges arrondies (711, 721) sont en un matériau ayant un point de fusion supérieur à 900°C et une dureté MOHS inférieure à 6, et
**en ce que** les charges arrondies (711, 721) qui font saillie sur ledit revêtement d'émail (3, 4, 61, 62) sont réparties de manière homogène à la surface dudit revêtement (3, 4, 61, 62).

2. Article culinaire (1) selon la revendication 1, **caractérisé en ce que** la densité surfacique des charges arrondies (711, 721) qui font saillie sur ledit revêtement d'émail (3, 4, 61, 62) est comprise entre 150 et 300 charges/mm².

3. Article culinaire (1) selon la revendication 1 ou 2, **caractérisé en ce que** la dureté MOHS du matériau constitutif desdites charges arrondies (71, 711, 72, 721) est égale ou inférieure à 5,5.

4. Article culinaire (1) selon l'une quelconque des revendications 1 à 3, **caractérisé en ce que** les charges arrondies (71, 711, 72, 721) sont en métal.

5. Article culinaire (1) selon l'une quelconque des revendications 1 à 4, **caractérisé en ce que** ledit revêtement d'émail (3, 4, 61, 62) comprend au moins une couche externe (61, 62) qui est une couche sérigraphique obtenue à partir d'une pâte d'émail rhéofluidifiante thixotrope, ladite couche externe (61, 62) contenant lesdites charges arrondies (71, 711, 72, 721).

6. Article culinaire (1) selon la revendication 5, **caractérisé en ce que** ledit revêtement d'émail (3, 4, 61, 62) comprend successivement à partir du fond (2) :
- une première couche d'émail (3) recouvrant la face extérieure (22) du fond (2),
- une deuxième couche d'émail (4) recouvrant ladite première couche d'émail (3),
- une troisième couche d'émail (61) contenant des charges arrondies (71, 711) et formant une couche sérigraphique externe continue recouvrant totalement ladite deuxième couche d'émail (4).

7. Article culinaire (1) selon la revendication 6, **caractérisé en ce que** ladite troisième couche d'émail (61) est partiellement recouverte par une quatrième couche d'émail (62) contenant des charges arrondies (72, 721) et formant une couche externe discontinue constituant un décor.

8. Article culinaire (1) selon l'une quelconque des revendications 5 à 7, **caractérisé en ce que** les charges arrondies (71, 711, 72, 721) sont sphériques, avec un diamètre maximal au plus égal à deux fois l'épaisseur de la couche externe (61, 62).

9. Article culinaire (1) selon la revendication 8, **caractérisé en ce que** le diamètre des charges sphériques (71, 711, 72, 721) est compris entre 5 et 40 µm, leur diamètre moyen étant compris entre 15 et 20 µm, et l'épaisseur de la couche externe (61, 62) étant comprise entre 15 et 30 µm.

10. Article culinaire (1) selon l'une quelconque des revendications 5 à 9, **caractérisé en ce que** ladite couche d'émail externe (61, 62) comprend entre 5 et 30% en poids de charges métalliques (71, 711, 72, 721).

11. Pièce intermédiaire non cuite conduisant, après cuisson, à l'article culinaire (1) tel que défini selon l'une quelconque des revendications 1 à 10,
**caractérisé en ce que** ledit revêtement d'émail (3, 4, 61, 62) **non cuit** comprend au moins une couche externe (61, 62) de pâte d'émail rhéofluidifiante thixotrope dans laquelle sont contenues lesdites charges arrondies (71, 711, 72, 721), et
**en ce que** lesdites charges arrondies (71, 711, 72, 721) sont en un matériau ayant un point de fusion supérieur à 900°C et une dureté MOHS inférieure à 6, les charges (711, 721) qui font saillie sur ledit revêtement d'émail (3, 4, 61, 62) étant réparties de manière homogène dans ladite couche externe (61, 62).

12. Pièce intermédiaire selon la revendication 11, **caractérisé en ce que** ladite couche de pâte rhéofluidifiante thixotrope (62) comprend 5 à 30% en poids de charges arrondies.

13. Procédé de fabrication d'un article culinaire (1) tel que défini selon l'une quelconque des revendications 1 à 10, comprenant les étapes successives suivantes :
- application sur la surface extérieure (22) du fond (2) d'une première couche d'émail (3), par pulvérisation d'une barbotine aqueuse de fritte d'émail, suivie d'un séchage et d'une cuisson à une température supérieure à 800°C ;
- application sur ladite première couche d'émail (3) cuite d'une deuxième couche d'émail (4) par pulvérisation d'une barbotine aqueuse de fritte d'émail, suivie d'un séchage ;
- application par sérigraphie sur ladite deuxième couche d'émail (4) d'une couche de pâte d'émail (61) continue contenant des charges arrondies (71, 711), puis séchage ; et
- cuisson finale de l'article (1) ;
**caractérisé en ce que** lesdites charges arrondies (71, 711) sont en un matériau ayant un point de fusion supérieur à 900°C et une dureté MOHS inférieure à 6, et
**en ce que** la couche de pâte d'émail (61) est rhéofluidifiante et thixotrope.

14. Procédé selon la revendication 13, **caractérisé en ce que** la couche de pâte d'émail (61) comprend 5 à 30% en poids de charges arrondies (71, 711), 1 à 10% en poids de cire, et 20 à 50 % en poids de dérivés résiniques ou terpéniques.

15. Procédé selon la revendication 13 ou 14, **caractérisé en ce qu'**il comprend en outre, entre l'application et le séchage de la couche continue de pâte d'émail (61) et la cuisson, une étape d'application par sérigraphie sur ladite couche continue de pâte d'émail (61) séchée d'une couche discontinue de pâte d'émail (62) contenant des charges arrondies (72, 721), puis séchage, ladite couche discontinue de pâte d'émail (62) étant rhéofluidifiante et thixotrope.

16. Procédé l'une quelconque des revendications 13 à 15, **caractérisé en ce que** la barbotine aqueuse de fritte d'émail destinée à former la deuxième couche d'émail (4) comprend des agents cohésifs, qui sont de préférence choisis parmi les liants organiques, les gommes, et la carboxyméthylcellulose.

## Claims

1. An item of cookware (1) having a base (2) with an inner surface (21) capable of receiving foodstuffs and an outer surface (22) designed to be placed next to a heat source, said outer surface (22) being covered with an enamel coating (3, 4, 61, 62) which includes round fillers (71, 711, 72, 721), some (711, 721) of which project from said enamel coating (3, 4, 61, 62) so that said projections are visible on the outside,
**characterized in that** said round fillers (711, 721) are made of a material having a melting point greater than 900°C and a MOHS hardness of less than 6, and
**in that** the round fillers (711, 721) projecting from said enamel coating (3, 4, 61, 62) are uniformly distributed over the surface of said coating (3, 4, 61, 62).

2. An item of cookware (1) according to Claim 1, **characterized in that** the surface density of the round fillers (711, 721) projecting from said enamel coating (3, 4, 61, 62) is between 150 and 300 fillers/mm².

3. An item of cookware (1) according to Claim 1 or 2, **characterized in that** the MOHS hardness of the material forming said round fillers (71, 711, 72, 721) is equal to or less than 5.5.

4. An item of cookware (1) according to any one of Claims 1 to 3, **characterized in that** the round fillers (71, 711, 72, 721) are made of metal.

5. An item of cookware (1) according to any one of Claims 1 to 4, **characterized in that** said enamel coating (3, 4, 61, 62) comprises at least one outer layer (61, 62) which is a screen-printed layer obtained from a rheofluidifying thixotropic enamel paste, said outer layer (61, 62) containing said round fillers (71, 711, 72, 721).

6. An item of cookware (1) according to Claim 5, **characterize in that** said enamel coating (3, 4, 61, 62) comprises successively, starting from the base (2):
- a first layer of enamel (3) covering the outer surface (22) of the base (2),
- a second layer of enamel (4) covering said first layer of enamel (3),
- a third layer of enamel (61) containing round fillers (71, 711) and forming a continuous screen-printed outer layer completely covering said second layer of enamel (4).

7. An item of cookware (1) according to Claim 6, **characterized in that** said third layer of enamel (61) is partly covered by a fourth layer of enamel (62) containing round fillers (72, 721) and forming a decorative discontinuous outer layer.

8. An item of cookware (1) according to any one of Claims 5 to 7, **characterized in that** the round fillers (71, 711, 72, 721) are spherical, with a maximum diameter equal to no more than twice the thickness of the outer layer (61, 62).

9. An item of cookware (1) according to Claim 8, **characterized in that** the diameter of the spherical fillers (71, 711, 72, 721) is between 5 and 40 µm, their mean diameter being between 15 and 20 µm, and the thickness of the outer layer (61, 62) being between 15 and 30 µm.

10. An item of cookware (1) according to any one of Claims 5 to 9, **characterized in that** said outer layer of enamel (61, 62) includes between 5 and 30% by weight of metal fillers (71, 711, 72, 721).

11. An intermediate unfired piece leading, after firing, to the item of cookware (1) as defined according to any one of Claims 1 to 10,
**characterized in that** said **unfired** enamel coating (3, 4, 61, 62) comprises at least one outer layer (61, 62) of rheofluidifying thixotropic enamel paste in which are contained said round fillers (71, 711, 72, 721), and
**in that** said round fillers (71, 711, 72, 721) are made of a material having a melting point greater than 900°C and a MOHS hardness of less than 6, the fillers (711, 721) projecting from said enamel coating (3, 4, 61, 62) being uniformly distributed in said outer layer (61, 62).

12. An intermediate piece according to Claim 11, **characterized in that** said layer of rheofluidifying thixotropic paste (62) includes 5 to 30% by weight of round fillers.

13. A method of manufacturing an item of cookware (I) as defined according to any one of Claims 1 to 10, comprising the following successive steps:
- application onto the outer surface (22) of the base (2) of a first layer of enamel (3), by spraying of an aqueous slip of enamel frit, followed by drying and firing at a temperature of more than 800°C;
- application onto said first fired layer of enamel (3) of a second layer of enamel (4) by spraying of an aqueous slip of enamel frit, followed by drying;
- application, by screen printing, onto said second layer of enamel (4) of a continuous layer of enamel paste (61) containing round fillers (71, 711), then drying; and
- final firing of the item (1);
**characterized in that** said round fillers (71, 711) are made of a material having a melting point greater than 900 °C and a MOTHS hardness of less than 6, and
**in that** the layer of enamel paste (61) is rheofluidifying and thixotropic.

14. A method according to Claim 13, **characterized in that** the layer of enamel paste (61) includes 5 to 30% by weight of round fillers (71, 711), 1 to 10% by weight of wax, and 20 to 50% by weight of resin derivatives or terpene derivatives.

15. A method according to Claim 13 or 14, **characterized in that** it also comprises, between the application and drying of the continuous layer of enamel paste (61) and the firing process, a stage involving the application, by screen printing, onto said dried continuous layer of enamel paste (61) of a discontinuous layer of enamel paste (62) containing round fillers (72, 721), then drying, said discontinuous layer of enamel paste (62) being rheofluidifying and thixotropic.

16. A method according to any one of Claims 13 to 15, **characterized in that** the aqueous slip of enamel frit designed to form the second layer of enamel (4) comprises cohesive agents, which are preferably chosen from among organic binding agents, gums, and carboxymethylcellulose.

## Patentansprüche

1. Kochartikel (1), der einen Boden (2) mit einer Lebensmittel aufnehmenden Innenseite (21) und einer Außenseite (22), die in Richtung einer Wärmequelle angeordnet werden soll, aufweist, wobei die Außenseite (22), mit einem Emailleüberzug (3, 4, 61, 62) überzogen ist, der gerundete Füllteilchen (71, 711, 72, 721) umfasst, von denen einige (711, 721) über den Emailleüberzug (3, 4, 61, 62) derart vorstehen, dass dieser Vorsprung äußerlich sichtbar ist,
**dadurch gekennzeichnet, dass** die gerundeten Füllteilchen (711, 721) aus einem Material mit einem Schmelzpunkt höher als 900°C sind und eine MOHS Härte unterhalb von 6 haben, und
dass die gerundeten Füllteilchen (711, 721), die über den Emailleüberzug (3, 4, 61, 62) vorstehen, in homogener Weise an der Oberfläche des Überzugs (3, 4, 61, 62) verteilt sind.

2. Kochartikel (1) nach Anspruch 1, **dadurch gekennzeichnet, dass** die Oberfächendichte der gerundeten Füllteilchen (711, 721), die über den Emailleüberzug (3, 4, 61, 62) vorstehen, zwischen 150 und 300 Teilchen/mm² beträgt.

3. Kochartikel (1) nach Anspruch 1 oder 2, **dadurch gekennzeichnet, dass** die MOHS Härte des Werkstoffs der gerundeten Füllteilchen (71, 711, 72, 721) gleich oder kleiner 5,5 ist.

4. Kochartikel (1) nach einem Ansprüche 1 bis 3, **dadurch gekennzeichnet, dass** die gerundeten Füllteilchen (71, 711, 72, 721) aus Metall sind.

5. Kochartikel (1) nach einem der Ansprüche 1 bis 4, **dadurch gekennzeichnet, dass** der Emailleüberzug (3, 4, 61, 62) wenigstens eine Außenschicht (61, 62) umfasst, die eine Siebdruckschicht ist, die aus einer thixotropen, rheofluiden Emaillepaste erhalten wird, wobei die äußere Schicht (61, 62) die gerundeten Füllteilchen (71, 771, 72, 721) enthält.

6. Kochartikel (1) nach Anspruch 5, **dadurch gekennzeichnet, dass** der Emailleüberzug (3, 4 61, 62) nacheinander ausgehend vom Boden (2) aufweist:
- eine erste Emailleschicht (3), welche die Außenseite (22) des Bodens (2) überdeckt,
- eine zweite Emailleschicht (4), welche die erste Emailleschicht (3) überdeckt,
- eine dritte Emailleschicht (61), welche die gerundeten Füllteilchen (71, 711) enthält und eine durchgehende äußere Siebdruckschicht bildet, welche die zweite Emailleschicht (4) vollständig überdeckt.

7. Kochartikel (1) nach Anspruch 6, **dadurch gekennzeichnet, dass** die dritte Emailleschicht (61) teilweise durch eine vierte Emailleschicht (62) überdeckt ist, welche gerundete Füllteilchen (72, 721) enthält und eine äußere diskontinuierliche Schicht formt, welche ein Dekor bildet.

8. Kochartikel (1) nach einem der Ansprüche 6 bis 7, **dadurch gekennzeichnet, dass** die gerundeten Füllteilchen (71, 711, 72, 721) sphärisch sind, mit einem maximalen Durchmesser von höchstens gleich dem Zweifachen der Dicke der äußeren Schicht (61,62).

9. Kochartikel (1) nach Anspruch 8, **dadurch gekennzeichnet, dass** der Durchmesser der sphärischen Füllteilchen (71, 711, 72, 721) zwischen 5 und 40 µm liegt, ihr mittlerer Durchmesser zwischen 15 und 20 µm beträgt und die Dicke der äußeren Schicht (61, 62) zwischen 15 und 30 µm beträgt.

10. Kochartikel (1) nach einem der Ansprüche 5 bis 9, **dadurch gekennzeichnet, dass** die äußere Emailleschicht (61, 62) zwischen 5 und 30 Gew. % der metallischen Füllteilchen (71, 711, 72, 721) aufweist.

11. Nicht gebranntes Zwischenstück, das nach einem Brennvorgang, mit dem Kochartikel (1), wie dieser in einem der Ansprüche 1 bis 10 definiert ist, leitend ist, **dadurch gekennzeichnet, dass** der nicht gebrannte Emailleüberzug (3, 4, 61, 62) wenigstens eine äußere Schicht (61, 62) aus thixotroper, rheofluider Emaillepaste umfasst, in welcher die gerundeten Füllteilchen (71, 711, 72, 721) enthalten sind, und dass die gerundeten Füllteilchen (71, 711, 72, 721) aus einem Material sind, das einen Schmelzpunkt höher als 900°C und eine MOHS Härte unterhalb von 6 hat, wobei die Füllteilchen (711, 721), die über den Emailleüberzug (3, 4, 61, 62) vorstehen, in homogener Weise in der äußeren Schicht (61, 62) verteilt sind.

12. Zwischenstück nach Anspruch 11, **dadurch gekennzeichnet, dass** die thixotrope, rheofluide Pastenschicht (62) 5 bis 30 Gew. % gerundete Füllteilchen enthält.

13. Verfahren zur Herstellung eines Kochartikels (1), wie dieser in einem der Ansprüche 1 bis 10 definiert ist, umfassend die aufeinanderfolgenden Schritte:
- Aufbringen einer ersten Emailleschicht (3) auf der äußeren Oberfläche (22) des Bodens (2) durch Zerstäuben eines wässrigen Breis aus geschmolzener Emaille, gefolgt von einer Trocknung und einem Brennvorgang bei einer Temperatur höher als 800°C;
- Aufbringen einer zweiten Emailleschicht (4) auf der ersten gebrannten Emailleschicht (3) durch Zerstäuben eines wässrigen Breies aus geschmolzener Emaille, gefolgt von einer Trocknung;
- Aufbringen durch Siebdruck einer kontinuierlichen Emaillepastenschicht (61) auf die zweite Emailleschicht (4), welche gerundete Füllteilchen (71, 711) enthält, dann Trocknung; und
- abschließendes Brennen des Artikels (1);
**dadurch gekennzeichnet, dass** die gerundeten Füllteilchen (71, 711) aus einem Material sind, das einen Schmelzpunkt höher als 900°C und eine MOHS Härte unter 6 hat, und
dass die Emaillenpastenschicht (61) rheofluid und thixotrop ist.

14. Verfahren nach Anspruch 13, **dadurch gekennzeichnet, dass** die Emaillenpastenschicht (71) 5 bis 30 Gew.% gerundeter Füllteilchen (71, 711), 1 bis 10 Gew.% Wachs und 20 bis 50 Gew.% Harz- und/oder Terpen- Abkömmlinge umfasst.

15. Verfahren nach Anspruch 13 oder 14, **dadurch gekennzeichnet, dass** dieses ferner umfasst, zwischen der Aufbringung und dem Trocknen der kontinuierlichen Emaillenpastenschicht (61) und dem Brennen einen Schritt der Aufbringung mittels Siebdruck auf die getrocknete kontinuierliche Emaillenpastenschicht (61) einer diskontinuierlichen Emaillenpastenschicht (62), welche die gerundeten Füllteilchen (72, 721) enthält, dann Trocknung, wobei die diskontinuierliche Emaillenpastenschicht (62) rheofluid und thixotrop ist.

16. Verfahren nach einem der Ansprüche 13 bis 15, **dadurch gekennzeichnet, dass** der wässrige Brei aus geschmolzener Emaille, welcher die zweite Emaillenschicht (4) bilden soll, kohäsive Stoffe umfasst, die vorzugsweise ausgewählt sind aus organischen Bindemitteln, Gummis und Carboxymethylzellulose.
